# EUROPEAN PATENT SPECIFICATION

(11) **EP 2 033 244 B1**
(45) Date of publication and mention of the grant of the patent: **30.12.2009**
(21) Application number: 07733402.7
(22) Date of filing: 28.06.2007
(51) Int. Cl.: H01M 4/02

(54) **CONDUCTIVE POLYMER**
LEITFÄHIGES POLYMER
POLYMÈRE CONDUCTEUR

(30) Priority: 28.06.2006 GB 0612760
(43) Date of publication of application: 11.03.2009
(73) Proprietor: BAC2 Limited, Second Avenue Southampton S01S 0DJ (GB)
(72) Inventor: MURRAY, Graham, Simpson, Eastleigh, Hampshire SO50 7LQ (GB)
(74) Representative: Peel, James Peter
(86) International application number: PCT/GB2007/002412
(87) International publication number: WO 2008/001089

(56) References cited:
- EP-A2- 0 139 309
- WO-A-2004/091015

## Description

The present invention relates to a conductive polymer and its uses.

There is a need, particularly in the nascent fuel cell industry, for low cost, mouldable, conductive polymer materials. The widespread adoption of fuel cells is currently limited by the cost of key components such as bipolar plates, which separate the individual reaction cells where hydrogen and oxygen (air) are combined forming electricity and water as the emission product. The bipolar plates have to conduct electricity, keep the reaction gasses separated and channel away the waste water and heat from the reaction. Presently, composite plates using conductive particles, such as graphite, bound together with electrically insulating resins are used.

There is also a need for such conductive polymers in other applications such as conductive adhesives, conductive coatings, electromagnetic shielding, and other components of electrochemical cells such as the electrolyte.

In WO 2004/091015, there is disclosed an ester-cured aqueous alkaline phenolic resole resin containing conducting alkaline salts and doped with a conducting material for use in these applications.

A way of ameliorating these problems has been sought.

According to the invention there is provided a polymer comprising an acid cured solvented resole wherein the solvented resole is substantially free from water.

The polymer according to the invention has been found to be conductive. Indeed a sample of the polymer (which does not contain an additional conducting material) has been found to have superior conductivity to the Examples in WO 2004/091015 of polymers which do not contain such a material. This is surprising because normally acid cured phenolic polymers have good electrical insulating capabilities. This can be seen from Example 11 of WO 2004/091015 which is of an acid cured aqueous (the resin used had a water content of 28% by weight) resole polymer composition. This Example was found to be insulating because it had a resistance of over 20 Mohms cm. It is therefore surprising that the polymer according to the invention has such good conductivity.

The polymer according to the invention shares the following advantages with the polymer used in WO 2004/091015:
■ the polymer cures at room temperature
■ the polymer can be moulded under low and high pressures;
■ the polymer can be doped with conductive carbon particles;
■ the polymer is of higher conductivity than binders normally used to bind carbon so deterioration in conductivity is minimised;
■ the polymer is cured with minimal shrinkage resulting in a more durable product requiring no machining and having good material strength;
■ the polymer can be foamed to produce a 3-d porous conductive structure with high surface area;
■ the polymer can be doped with a non carbon conductive filler; and
■ a high volume production rate is possible.

The invention has the following further advantages over that used in WO 2004/091015:
■ the resin (which comprises the solvented resole starting material) has better storage stability than standard resoles;
■ the resin is more stable at higher temperatures than that for an aqueous polymer;
■ less brittle;
■ optionally translucent;
■ the resin has a lower reactivity to acid; and
■ the resin allows a higher level of acid to be employed.

The polymer according to the invention preferably comprises a phenolic resole, a solvent and an acid. The solvent used in the invention is preferably a low polarity organic solvent. The low polarity organic solvent for the phenolic resole preferably has a polarity such that it is appreciably water soluble in that the low polarity solvent does not form a visible bi-layer when mixed with water. The low polarity organic solvent optionally has a boiling point which is greater than 100°C. This is useful because it allows it to be used as a solvent in the preparation of the phenolic resole for use in the invention. This is because the phenolic resole is generally available as an aqueous solution which needs to be treated to reduce its water content. Usually the water content is reduced by heating the phenolic resole, under vacuum to remove excess water by evaporation or distillation. Optionally, a low polarity organic solvent having a boiling point less than 100°C may be added to the solvented resole which is substantially free from water. Examples of suitable low polarity organic solvents include an ester, an aldehyde (for example caproaldehyde, phenylacetalaldehyde and/or anisaldehyde), a ketone (for example acetone, methyl isobutal ketone, acetophenone and/or propiophenone), a haloalkane and/or a carboxylic acid (for example acetic acid).

The low polarity organic solvent is preferably an ester. It is surprising that an ester is a suitable solvent for the phenolic resole because esters are used as curing agents for phenolic resoles described in WO 2004/091015. The ester solvent for the phenolic resole is preferably of formula

R¹COOR² (I)

wherein R¹ represents a hydrogen atom or a straight or branched chain alkyl group containing from 1 to 20 carbon atoms (preferably from 1 to 8, preferably 1 to 4, more preferably from 1 to 2 carbon atoms) optionally substituted by a halogen atom, an amino group, and/or a - COOR² group; and R² represents a straight or branched chain alkyl group containing from 1 to 8 carbon atoms (preferably from 1 to 4, more preferably from 1 to 2 carbon atoms) optionally substituted by a hydroxy group; or
R² represents a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms)); or
R¹ represents a chemical bond to R² and R² represents a straight or branched chain alkyl group containing from 2 to 10 carbon atoms (preferably from 2 to 4 carbon atoms).

A suitable ester for use as the low polarity organic solvent includes, but is not restricted to, a carboxylic acid ester, an ester of a polyhydric alcohol, a dibasic ester, a lactone, phenolic ester and a resole ester. Examples of carboxylic acid esters with a boiling point below 100°C include methyl formate and ethyl formate; examples of carboxylic acid esters with a boiling point above 100°C include benzyl acetate, phenyl acetate. Examples of polyhydric alcohol esters include glycerol triacetate and ethylene glycol diacetate. Examples of dibasic esters are dimethyl succinnate, dimethyl glutamate, dimethyl stearate, and dimethyl adipate. Examples of lactones include propiolactone, butyrolactone, valerolactone and caprolactone. Examples of phenolic esters are phenyl acetate and resorcinol diacetate. An example of an ester is 2,4,6-tris-acetoxymethylphenyl acetate. Mixtures of esters may be used, for example butyrolactone and triacetin. Lower boiling esters such as methyl acetate and butyl acetate may be added as solvents after distillation to modify the solvented resin viscosity.

The term substantially free from water in the present specification is intended to cover a water content which is sufficiently low for the phenolic resole to be cured by a sufficient amount of acid for the resin to have conductive properties without a violent exotherm when the acid and phenolic resole are mixed. This water content may easily be determined by a person of skill in the art depending on the starting materials used. Preferably, the water content is less than 5% by weight, preferably less than 4% by weight, preferably less than 3% by weight, preferably less than 2% by weight, preferably less than 2% by weight, preferably less than 1% by weight.

The term violent exotherm in the present specification means a reaction where excessive heat is generated and control of the process is lost resulting in no useful product being obtained and potential risk to personnel and equipment.

The term conductive in the present specification means a surface resistivity of 5 x 10⁶ Ohms cm or less.

The phenolic resole is preferably a reaction product of a phenol-reactive aldehyde with a compound of formula 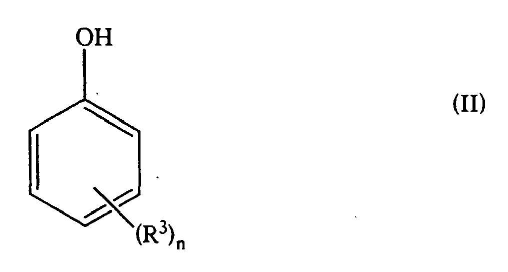 wherein R³ represents a straight or branched chain optionally unsaturated alkyl group containing from 1 to 8 carbon atoms (preferably from 1 to 4 carbon atoms, more preferably from 1 to 2 carbon atoms) optionally substituted by a halogen atom (preferably chlorine) or a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms) optionally substituted by a halogen atom (preferably chlorine) or a hydroxy group); and
n represents 0, 1 or 2.

Examples of suitable compounds of formula (II) include, but are not restricted to phenol itself, a substituted phenol such as an alkylated phenol, halogenated phenol and polyhydric phenol, and a hydroxy-substituted poly-nuclear aromatic. Examples of an alkylated phenol include methylphenol (also known as cresol), dimethylphenol (also known as xylenol), 2-ethylphenol, pentylphenol and tert-butyl phenol. Examples of a halogenated phenol are chlorophenol and bromophenol. Examples of polyhydric phenols include 1,3-benzenediol (also known as resorcinol), 1,2-benzenediol (also known as pyrocatechol), 1,4-benzenediol (also known as hydroquinone), 1,2,3-benzenetriol (also known as pyrogallol), 1,3,5-benzenetriol and 4-tert-butyl-1,2-benzenediol (also known as tert-butyl catechol). Examples of a hydroxy-substituted poly-nuclear aromatic include 4,4'-isopropylidenebisphenol (also known as bisphenol A), 4,4'methylidenebisphenol (also known as bisphenol F) and naphthol.

A compound formed by the condensation reaction of two or more compounds of formula (II) with one or more phenol-reactive aldehydes are suitable for use as the phenolic resole used in the resin according to the invention. Examples include, but are not limited to, a resinous reaction product of phenol itself, a salt of a substituted phenol such as an alkylated phenol, halogenated phenol and a multi-hydroxy phenol, and a hydroxy-substituted multi-ring aromatic. Furthermore, a mixture of an aldehyde-reactive phenol, such as one obtained from coal tar fractionation, depolymerised lignin and cashew nut shell liquid, can be employed as all or part of the phenolic resole.

The phenol-reactive aldehyde used to react with the compound of formula (II) to form a phenolic resole is preferably a compound of formula

R⁴CHO (III)

wherein R⁴ represents a hydrogen atom or a straight or branched chain alkyl group having from 1 to 8 (preferably from 1 to 4, more preferably from 1 to 2, most preferably 1) carbon atoms; or a precursor of a compound of formula (III).

Examples of a suitable aldehyde include formaldehyde, acetaldehyde, propionaldehyde, n-butylaldehyde, n-valeraldehyde, caproaldehyde. A compound suitable for use as a precursor for a compound of formula (III) include a compound that decomposes to formaldehyde such as paraformaldehyde, trioxane, furfural, hexamethylenetriamine, an acetal that liberates formaldehyde on heating, and benzaldehyde.

The aldehyde is preferably reacted with the compound of formula (II) in a molar ratio of phenol to aldehyde from 1:1 to 1:3, preferably from 1:1.2 to 1:3, more preferably from 1:1.5 to 1:3.

The acid used in the invention is believed to provide two functions which are to catalyse curing of the resin and to promote conductivity of the polymer. The mechanism by which the acid promotes the conductivity of the polymer is not understood. In order to act as a conductivity promoter, the acid may be added in a large quantity compared to the amount of the acid required for it to act as a catalyst. The acid may be selected so that it is strong enough to act as a catalyst but not so strong that when it is added in a sufficient quantity for it to act as a conductivity promoter, there is a violent exotherm. The acid may be selected from an inorganic acid, an organic acid and/or an organo-mineral acid. The organo-mineral acid may be a low molecular weight organo-mineral acid or a high molecular weight organo-mineral acid.

A suitable low molecular weight organo-mineral acid for use as the acid is preferably a compound of formula

R⁵X (IV)

wherein R⁵ represents
a hydrogen atom;
a straight or branched chain alkyl group containing from 1 to 8 carbon atoms (preferably from 1 to 4, more preferably from 1 to 2 carbon atoms) optionally substituted by a halogen atom; or
a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms)); and
X represents a sulphonic acid group (-SO₃H), a phosphoric acid group (-OP(OH)₃) or a phosphorous acid group (-P(O)(OH)₂).

The acid is preferably an organo-mineral acid. Preferably R⁵ in the compound of formula (IV) represents a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms)). Examples of suitable low molecular weight organo-mineral acids include phenol sulphonic acid, toluene sulphonic acid or xylene sulphonic acid. Preferably the low molecular weight organo-mineral acid is a phenol sulphonic acid or paratoluene sulphonic acid.

A suitable high molecular weight organo-mineral acid for use as the acid is preferably a compound of formula

(R⁶(X)CH₂)ₚ(R⁶CH₂)_{q}(R⁶) (V)

wherein R⁶ represents a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms));
X is as defined above; p represents an integer from 1 to 10 and q represents 0 or an integer from 1 to 9 such that the sum of p and q is from 3 to 20. Preferably the sum of p and q is from 3 to 10. More preferably the sum of p and q is from 4 to 6. Preferably q represents zero or an integer from 1 to 3, more preferably q represents zero or 1. Preferably X represents a sulphonic acid group.

An additional benefit of using a compound of formula (V) which is a phenol sulphonic acid or a compound of formula (VI) which is a novolak sulphonic acid as the catalyst to cure the phenolic resole is a reduction in free formaldehyde emission during the crosslinking reaction as the phenolic acids become linked within the final polymer matrix.

The amount of acid used should be sufficient for the polymer to be conductive without diluting the resin to a point where the structural integrity of the cured polymer is diminished. Generally a suitable amount is greater than 10% by weight of the solvented resole. Preferably the amount of acid is greater than 15% by weight of the solvented resole, preferably greater than 20% by weight of the solvented resole. Where the acid is a low molecular weight acid, preferably up to 300% by weight of the solvented resole may be used; preferably up to 200% by weight of the solvented resole may be used, more preferably up to 150% by weight of the solvented resole may be used, most preferably up to 100% by weight of the solvented resole may be used. Where the acid is a high molecular weight acid, preferably up to 500% by weight of the solvented resole may be used; preferably up to 400% by weight of the solvented resole may be used; preferably up to 300% by weight of the solvented resole may be used; preferably up to 200% by weight of the solvented resole may be used, more preferably up to 150% by weight of the solvented resole may be used, most preferably up to 100% by weight of the solvented resole may be used.

The polymer according to the invention is preferably prepared from a phenolic resole, a solvent and an acid. Generally the phenolic resole and the solvent are provided together in the form of a solvented resole (also referred to herein as a resin). According to the invention there is further provided a method of preparing a conductive polymer which method comprises:
providing a solvented resole which comprises a phenolic resole and an solvent;
optionally heating the solvented resole to remove excess water;
mixing an acid with the solvented resole; and
allowing the mixture to cure. The solvented resole and acid are preferably as defined herein.

The polymer used in the invention optionally includes a plasticiser to increase flexibility of the polymer. It will be appreciated that for some applications a flexible polymer would be useful. The plasticiser is preferably inert, acid compatible, non-volatile, and/or liquid. Preferably the plasticiser is soluble in the resin and/or the polymer. A suitable amount of plasticiser is determined by the application requirements and is limited by the effect on conductivity of the resin. A person of skill in the art would be able to determine a suitable amount by trial and error. Examples of the plasticiser include an excess of the ester solvent, a polyvinylacetate and/or a polyethylene glycol.

The polymer may be foamed by employing a foam blowing agent in the resin to form a 3-d porous structure or by using a carbonate ester as the low polarity organic solvent. Examples of suitable foam blowing agents include any low boiling solvent of low water miscibility such as trichloro-monofluoromethane (CFC-11), a hydrogenated chlorofluorocarbon (called a HCFC), a partially hydrogenated fluorocarbon (called a HFC), a hydrocarbon such as iso-pentane and/or cyclopentane. Examples of suitable carbonate esters include cyclic carbonate esters such as propylene carbonate and ethylene carbonate. Such carbonate esters generate carbon dioxide on contact with the acid. The use of a blowing agent is not to produce an insulating foam but only to form a 3-d open cell structure. Therefore the blowing agent used is lost during the curing stage but can be recovered and recycled after formation of the 3-d structure. Other blowing agents such as carbon dioxide and/or nitrogen can also be employed.

The conductivity of the polymer according to the invention is enhanced by the addition of a conductive material. This additional conductive material will be referred to as a conductive filler. Any conductive material can be added to the resin as the conductive filler to impart improved conductivity provided the material is compatible with the resin components and does not interfere with the curing mechanism. Carbon, particularly in the form of graphite is suitable because of its compatibility with the resin and because it does not effect the chemistry of the reaction.

The form of carbon preferably selected to improve conductivity is preferably natural or synthetic graphite powder or flake. The main requirements of the carbon is resin compatibility, carbon wettability and conductivity. Carbon of a wide range of particle size can be used such as from particles having a sub micron particle size to particles having a particle size of millimetres. More than one carbon combination can be used with blends of different carbons such as activated carbon powder, polyacrylonitrile (PAN)-based carbon fibres, nano particles, nano tubes, nano fibres, pitch-based carbon fibres and carbon black. A combination of carbon with a non-carbon conductive filler such as an acid stable metal and/or a metal oxide powder, metal coated graphite or glass (such as nickel coated graphite or silver coated glass) may be used. Alternatively one or more non-carbon conductive fillers may be used on their own.

The polymer is preferably doped with a conductive filler in an amount such that the weight ratio of the resin to conducting material is preferably at least 0.001:1, more preferably at least 0.002:1, most preferably at least 1:1 and is preferably at most 100:1, more preferably at most 20:1 and most preferably at most 10:1.

According to the invention, there is also provided a shaped article formed from the polymer according to the invention which article is suitable for use as an electrical connector, an electrical current carrier, a shield for electrical or electrostatic discharge, an electrode, a heating element, an electrolyte, and/or a membrane. The shaped article is optionally formed by casting, moulding, extrusion, spraying, lamination, grinding (especially cryogenic grinding).

Where the shaped article according to the invention is for use as an electrical connector, it may be in the form of a moulded connector.

Where the shaped article according to the invention is for use as an electrical current carrier, it may be in the form of a cable or a conductive ink e.g. for use on a printed circuit board.

Where the shaped article according to the invention is for use as a shield for electrical or electrostatic discharge (e.g. in an antistatic application or from discharge near a electrical transmission source e.g. a generator, electricity pylon and/or transformer), it may be in the form of a floor covering (e.g. a mat), a wall covering, a part of a building (e.g. a prefabricated building, especially a wall, floor or ceiling part or a door), a piece of furniture (e.g. a table, chair or a bench), an air craft or a part thereof (e.g. a wing or wing part, a fuselage or a fuselage part etc), a filter (e.g. a fuel filter), a container (e.g. a silo), an antistatic surface (e.g. a surface suitable for spray painting), a conduit (e.g. a pipe), a valve and/or a part of industrial plant or equipment (e.g. to reduce potentially hazardous build up of static charge in an industrial process).

Where the shaped article according to the invention is for use as an electrode, it may be in the form of an electrode for a fuel cell, a solar cell or a battery. Alternatively, when the shaped article according to the invention is for use as an electrode, it may be in the form of a motor brush or a transducer (e.g. an underwater transducer).

Where the shaped article according to the invention is for use as a heating element, it may be for use in under floor heating or in an electric blanket (e.g. a curing blanket).

Where the shaped article according to the invention is for use as an electrolyte, it may be in the form of a fuel cell membrane or an electrolyte suitable for use in a battery.

Where the shaped article according to the invention is for use as a membrane, particularly a conductive membrane, it may be in the form of a gas sensor, humidity sensor, capacitor, antistatic film, conductive coating, ion exchange membrane, water electrolyser, and/or salt electrolyser.

According to the invention there is provided an electrical device comprising:
(a) a negative electrode;
(b) a positive electrode; and
(c) an electrolyte means; and optionally
(d) a separator and/or bipolar plate;
wherein one or more electrode and/or electrolyte means, separator or bipolar plate comprises a polymer according to the invention.

The bipolar and/or separator plate used in the electrical device according to the invention is preferably a separator plate according to the invention. It will be understood that when the electrical device comprises a bipolar plate, the device does not necessarily comprise a negative electrode (a) and a positive electrode (b). This is because a bipolar plate incorporates negative and positive electrodes.

According to the invention there is provided a separator plate suitable for use in a fuel cell having one or more flow field for directing gas flow wherein the plate comprises a polymer according to the invention.

According to the invention there is further provided an electrode comprising a polymer according to the invention.

The electrical device according to the invention is preferably a cell, a battery including two or more cells, or a capacitor (especially an electrolytic capacitor). Where the electrical device is a fuel cell, it includes at least one bipolar plate and inlets and outlets to control flow of oxygen and hydrogen through the cell.

A separator according to the invention has a single flow field. It is useful as a current collector, particularly in a fuel cell. A bipolar plate is a flat, gas impermeable, electrically conductive separator between individual fuel cells in a stack. It has a flow field on each side. A flow field is preferably at least one channel machined or moulded into the plate. The flow field is suitable for carrying fuel (usually hydrogen) on one side and an oxidant on the other side from entry and exit points in the fuel cell.

The electrolyte means of the electrical device according to the invention is optionally either in the form of an electrolyte or it is arranged to receive an electrolyte. For example the electrolyte means could be in the form of a conduit through which an electrolyte could flow during operation of the cell or the electrolyte means could be in the form of a container into which an electrolyte could be placed at least during operation of the cell.

The invention also provides use of the polymer according to the invention as an electrode.

The invention also provides use of the polymer according to the invention as an electromagnetic shielding material or to prevent electrostatic discharge at a location. Examples of applications for the polymer according to the invention as an electromagnetic shielding material include a housing for an electronic product, such as a computer, computer component, cash register, portable phone, other consumer electronics, an anti-static packaging material for use with an electronic component or with a fine powder, e.g. a food, where there is a risk of a dust explosion caused by electrostatic discharge.

The invention further provides a method of suppressing electromagnetic interference in a product which method includes shielding the product with a polymer according to the invention. The shielding preferably involves providing the product with a housing constructed at least partially from the polymer according to the invention. The product may be an electrical or electronic product.

The invention also provides a method of preventing electrostatic discharge at a location which method includes providing the polymer according to the invention at the location. A suitable location might be a packaging for a fine powder or for an electronic device or a component such as a micro chip or a printed circuit board; or the location might be a floor covering, a gas meter part, a water pump seal or a self lubricating bearing; or a workbench or a similar location where a device or a component sensitive to electrostatic discharge is manipulated or otherwise worked on.

According to the invention there is further provided a two part composition comprising (a) a solvented resole which is substantially free from water; and (b) an acid. The solvented resole and acid are preferably as defined herein. The two part composition is useful where a user wishes to prepare and apply the polymer of the invention at a location for example so as to use the polymer as an adhesive and/or as a filler. Where the composition is used as an adhesive, it may be a contact adhesive composition, especially a solder (preferably a lead-free solder) for use in printed circuit board manufacture.

According to the invention there is provided a method of adhering a first part to a second part which method comprises the steps of
providing a solvented resole which is substantially free from water and an acid;
mixing the solvented resole and the acid; and
using the mixed solvented resole and acid to adhere the first part to the second part.

According to the invention there is provided a conductive coating comprising a polymer according to the invention.

According to the invention there is further provided a conductive membrane comprising a polymer according to the invention. Conductive membranes are generally used in the following applications: gas sensors, humidity sensors, capacitors, antistatic films, conductive coatings, ion exchange membranes, water electrolysers, and/or salt electrolysers.

The invention is illustrated by reference to the following Figures of the drawings which are not intended to limit the scope of the invention claimed:
**Figure 1** is a schematic cross-section of a first embodiment of an electrical device according to the invention;
**Figure 2** is a schematic plan view of a second embodiment of an electrical device according to the invention; and
**Figure 3** is a schematic plan view of a bipolar plate according to the invention.

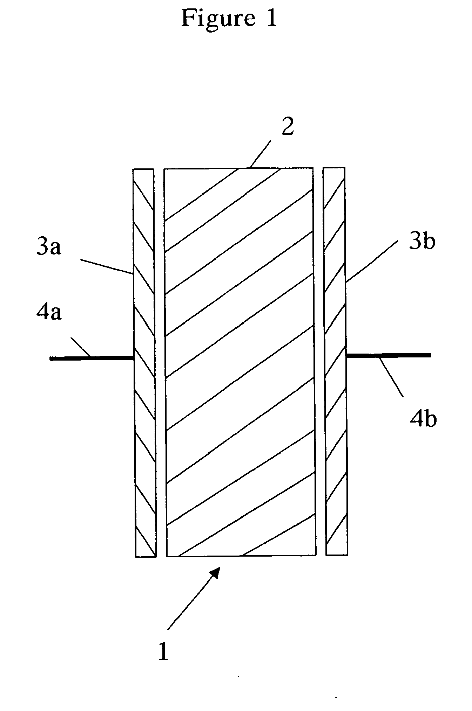

Figure 1 shows an electrical device 1 which has a block of electrolyte 2 with asymmetric electrodes 3a,3b at each side of it. The asymmetric electrodes are each provided with electrical connectors 4a,4b. The electrodes 3a,3b are asymmetric electrodes in that one acts as a cathode and the other acts as an anode. One or both of the asymmetric electrodes 3a,3b are formed from, a polymer prepared, for example, according to Example 1. In an alternative embodiment, the electrolyte 2 may also be formed from a polymer according to the invention, for example prepared according to Example 1. In a further alternative embodiment, the asymmetric electrodes 3a,3b may be formed from a conventional material known to a person skilled in the art and the electrolyte 2 may be formed from a polymer according to the invention.

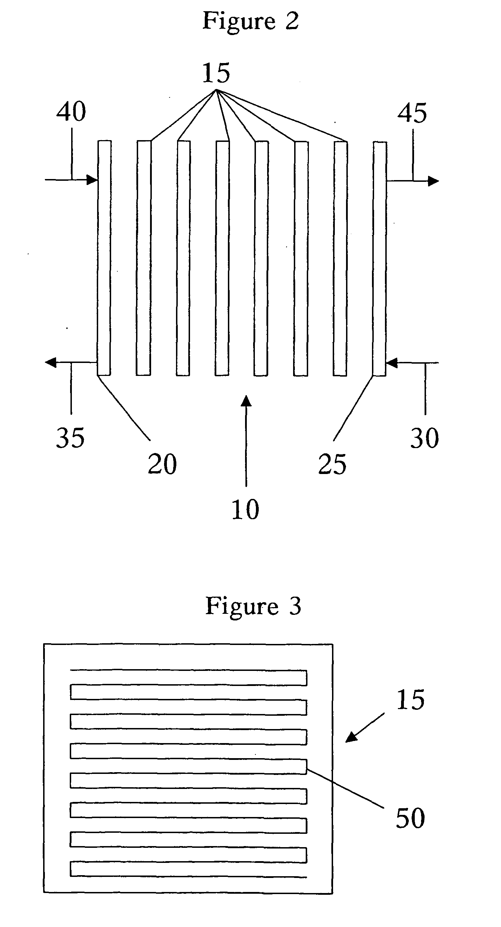

Figure 2 shows an electrical device, for example, in the form of a fuel cell 10 having a hydrogen inlet 30 and outlet 35 and an oxygen inlet 40 and outlet 45. The example fuel cell 10 has electrodes 20,25 and bipolar plates 15.

A bipolar plate 15 is shown in more detail in Figure 3 as having grooves 50 on its surface. The reverse face of the plate 15 also has grooves 50. A variant of the bipolar plate 15 is a separator plate which has grooves 50 on one face only.

The following Examples, which are not intended to limit the scope of the invention claimed, illustrate how to prepare a polymer according to the invention. The benefits of the invention are also demonstrated.

### EXAMPLE 1

This is an example of an electrically conductive acid cured solvented resole polymer according to the invention.

The following starting materials were used:

| | |
|---|---|
| Resin: solvented phenolic resole IDP139 | 100g |
| p-Toluene sulphonic acid | 40g |

The resin used was solvented phenolic resole IDP139 which was supplied by Borden Chemical Uk Ltd and kept in storage at room temperature for 5 years. It is a non aqueous resole resin in a solvent which is a mixture of dibasic esters including dimethyl glutamate, dimethyl succinate and dimethyl adipate. The p-toluene sulphonic acid was supplied by Degussa. It is a 65% by weight aqueous solution. Water was removed from solvented phenolic resole IDP139 by distillation such that the residual water content was about 2% by weight.

The solvented phenolic resole and acid were mixed and allowed to cure at room temperature over 7 days in an open polythene mould.

The cured polymer was a hard casting with a glossy exposed air surface and a matt surface on unexposed mould surface. The surface resistivity of the glossy and matt surface were measured using a Como DT3800 Digital Multimeter and the results were as follows:

| | |
|---|---|
| Glossy surface | > 20 M Ohms |
| Matt surface | 30 k Ohms |

This example illustrates that by the addition of a high amount of acid (40% by weight of the solvented phenolic resole), the electrical conductivity of a cured phenolic polymer is surprisingly increased. Standard aqueous phenolic resoles are typically cured with acid additions between 2-10% by weight of the resole. It would be impossible to add 40% by weight of an acid to an aqueous resin, to mix and cast, because it would be highly dangerous as a violent exotherm would result.

### COMPARATIVE EXAMPLE 2 AND EXAMPLES 3 TO 8

Examples of an electrically conductive acid cured solvented phenolic resole polymer according to the invention were prepared as well as a comparative Example.

Starting materials:
Resin: solvented phenolic resole EPR 2006/001 (Dynea, wherein the solvent is a mixture of dibasic esters including dimethyl glutamate, dimethyl succinate and dimethyl adipate).
p-Toluene Sulphonic Acid (65wt% aqueous solution) (Degussa)
Graphite Grade 2369 (Branwell)

Comparative Example 2 and Examples 3 to 7 were prepared as follows. Solvented phenolic resole resin was weighed into a plastic cup followed by the acid addition. The two components were hand mixed using a spatula for 15 seconds. The liquid mixtures were poured onto a flat ceramic plate to form a thick film and allowed to harden.

The sample films were measured for resisitivity after 24 hours using the Multimeter used in Example 1. The results obtained are shown in Table 1.

Example 8 was prepared as follows: graphite was weighed into a plastic cup followed by the solvented phenolic resole resin. The graphite and solvented phenolic resole resin were premixed for one minute prior to the acid addition. After the acid addition the paste-like mixture was mixed for 30 seconds and transferred to a plastic mould 2 cm x 2 cm x 1 cm and hand pressed. After 24 hours, the cured moulded sample polymer was measured for resisitivity using the Multimeter used in Example 1. The result obtained is shown in Table 1.

**TABLE 1**

| Example Number | Weight of solvented phenolic resole | Weight of acid | Weight of Graphite | % by weight (based on weight of resole) of acid | Resistivity (Ohms.cm) |
|---|---|---|---|---|---|
| Comp. 2 | 10g | 0.5g | 0 | 5 | > 20x 10⁶ |
| 3 | 10g | 2g | 0 | 20 | 4 x 10⁶ |
| 4 | 10g | 4g | 0 | 40 | 1.1 x 10⁴ |
| 5 | 6g | 4g | 0 | 66 | 1000 |
| 6 | 8g | 8g | 0 | 100 | 600 |
| 7 | 10g | 20g | 0 | 200 | 90 |
| 8 | 5g | 5g | 15g | 100 | 1.5 |

In Comparative Example 2, a typical "safe" 5wt% acid addition was used (based on the resin weight). The resistivity data for this Example shows that it is not conductive. In Examples 3 to 6, increasing amounts of acid were used, up to 200wt% acid (1 part resin : 2 part acid). It is very surprising that the samples, especially Examples 5, 6, 7 and 8 were stable. For a person of skill in the art, it would normally be unthinkable and dangerous to add so much acid. In the preparation of Example 8, there was a mild exotherm.

It can be seen from Table 1 that the resistivity measurements correlate with the amount of acid added. The resistivity of Examples 6 and 7 (100 and 200wt% acid added respectively) is better than any of the results obtained in the Examples of WO 2004/091015 without a conductive filler. The result obtained in Example 8 is comparable with results obtained in WO 2004/091015 for Examples also having a conductive filler.

### EXAMPLE 9

Example of an electrically conductive acid cured solvented phenolic resole polymer used as a coating is described. A ketone, acetone, was added to the solvented resole as follows:
Resin: solvented phenolic resole 20g (obtained from Dynea)
Acetone 20g

To this ketone/ester solvented resole, p-Toluene sulphonic acid 10g was added and the solution mixed with a laboratory bench high speed stirrer. The solution was poured over a flat plastic mould and allowed to cure at room temperature. As the acetone evaporated a conductive coating was formed. After 24 hours, a reading of 1.2 kΩ was measured on the surface of the coating.

### EXAMPLE 10

Example of an electrically conductive acid cured solvented phenolic resole polymer used as a coating on a glass tissue filter is described. A ketone, acetone, was added to the solvented resole as follows:
Resin: solvented phenolic resole 12g (obtained from Dynea)
Acetone 48g

To this ketone/ester solvented resole, p-Toluene sulphonic acid 12g was added and the solution mixed with a laboratory bench high speed stirrer. Into the solution a strip of 22gm⁻² glass tissue was dipped and then cure in an oven at 65°C for 1 minute. After 24 hours, a reading of 4.4 kΩ was measured on the surface of the glass filter.

## Claims

1. A conductive polymer comprising an acid cured solvented resole
wherein the solvented resole is substantially free from water.

2. A polymer as defined in Claim 1 wherein the solvented resole comprises a low polarity organic solvent preferably having a boiling point which is greater than 100°C.

3. A polymer as defined in any one of the preceding claims wherein the solvent is an ester, an aldehyde, a ketone, a haloalkane and/or a carboxylic acid.

4. A polymer as defined in any one of the preceding claims wherein the water content of the solvented resole is less than 5% by weight, preferably less than 4% by weight, preferably less than 3% by weight, preferably less than 2% by weight, preferably less than 2% by weight, preferably less than 1% by weight.

5. A polymer as defined in any one of the preceding claims wherein the solvented resole is a solvented reaction product of a phenol-reactive aldehyde with an optionally substituted phenol, the optionally substituted phenol preferably being a compound of formula 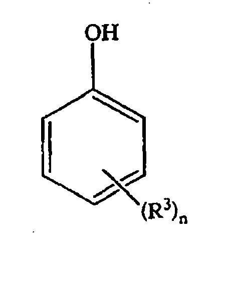 wherein R³ represents a straight or branched chain optionally unsaturated alkyl group containing from 1 to 8 carbon atoms (preferably from 1 to 4 carbon atoms, more preferably from 1 to 2 carbon atoms) optionally substituted by a halogen atom (preferably chlorine) or a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms) optionally substituted by a halogen atom (preferably chlorine) or a hydroxy group); and
n represents 0, 1 or 2,
and/or the phenol-reactive aldehyde preferably being a compound of formula
R⁴CHO (III)
wherein R⁴ represents a hydrogen atom or a straight or branched chain alkyl group having from 1 to 8 (preferably from 1 to 4, more preferably from 1 to 2, most preferably 1) carbon atoms; or a precursor of a compound of formula (III).

6. A polymer as defined in any one of the preceding claims wherein the acid is an inorganic acid, an organic acid or an organo-mineral acid, the organo-mineral acid preferably being a low molecular weight organo-mineral acid which is a compound of formula
R⁵X (IV)
wherein R⁵ represents
a hydrogen atom;
a straight or branched chain alkyl group containing from 1 to 8 carbon atoms (preferably from 1 to 4, more preferably from 1 to 2 carbon atoms) optionally substituted by a halogen atom; or
a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms)); and
X represents a sulphonic acid group (-SO₃H), a phosphoric acid group (-OP(OH)₃) or a phosphorous acid group (-P(O)(OH)₂);
or the organo-mineral acid preferably being a high molecular weight organo-mineral acid which is a compound of formula
(R⁶(X)CH₂)ₚ(R⁶CH₂)_{q}(R⁶) (V)
wherein R⁶ represents a phenyl group optionally substituted by a straight or branched chain optionally unsaturated alkyl group containing from 1 to 8 carbon atoms (preferably from 1 to 4 carbon atoms, more preferably from 1 to 2 carbon atoms) optionally substituted by a hydroxy group, a halogen atom (preferably chlorine), a hydroxy group, and/or a phenyl or benzyl group (optionally substituted by a hydroxy group and/or a straight or branched chain alkyl group containing from 1 to 8 carbon atoms (preferably from 1 to 4 carbon atoms, more preferably from 1 to 2 carbon atoms));
X is as defined above; p represents an integer from 1 to 10 and q represents an integer from 0 to 9 such that the sum of p and q is from 3 to 20.

7. A polymer as defined in any one of the preceding claims which further comprises a conductive filler.

8. An electrical device comprising:
(a) a negative electrode;
(b) a positive electrode; and
(c) an electrolyte means; and optionally
(d) a separator and/or bipolar plate;
wherein one or more electrode and/or electrolyte means, separator or bipolar plate comprises a polymer as defined in any one of the preceding claims.

9. A shaped article formed from the polymer as defined in any one of claims 1 to 7 which article is suitable for use as an electrical connector, an electrical current carrier, a shield for electrical or electrostatic discharge, an electrode, a heating element, an electrolyte, and/or an ion exchange membrane.

10. A shaped article as defined in claim 9 which is a separator plate suitable for use in a fuel cell having one or more flow field for directing gas flow, an electrode, a conductive coating or a conductive membrane.

11. Use of a polymer as defined in any one of claims 1 to 7 as an electrode, as an electromagnetic shielding material, to suppress electromagnetic interference, or to prevent electrostatic discharge at a location.

12. A two part composition comprising (a) solvented resole wherein the solvented resole is substantially free from water; and (b) an acid.

13. A method of adhering a first part to a second part which method comprises the steps of
providing a solvented resole which is substantially free from water and an acid;
mixing the solvented resole and the acid; and
using the mixed solvented resole and acid to adhere the first part to the second part.

14. A composition as defined in Claim 12 or a method as defined in Claim 13 wherein the solvented resole and acid are as defined in any one of claims 1 to 7.

15. A method of preparing a conductive polymer which method comprises:
providing a solvented resole which comprises a phenolic resole and an ester solvent;
optionally distilling the solvented resole to remove excess water;
mixing an acid with the solvented resole; and
allowing the mixture to cure,
the solvented resole and acid preferably being as defined in any one of claims 1 to 7.

## Patentansprüche

1. Leitfähiges Polymer, das ein säuregehärtetes lösungsmittelhaltiges Resol umfasst, wobei das lösungsmittelhaltige Resol im Wesentlichen frei von Wasser ist.

2. Polymer gemäß Anspruch 1, wobei das lösungsmittelhaltige Resol ein niedrigpolares organisches Lösungsmittel umfasst, das vorzugsweise einen Siedepunkt von über 100 °C aufweist.

3. Polymer gemäß einem der vorstehenden Ansprüche, wobei das Lösungsmittel ein Ester, ein Aldehyd, ein Keton, ein Halogenalkan und/oder eine Carbonsäure ist.

4. Polymer gemäß einem der vorstehenden Ansprüche, wobei der Wassergehalt des lösungsmittelhaltigen Resols kleiner als 5 Gew.-% ist, vorzugsweise kleiner als 4 Gew.-%, vorzugsweise kleiner als 3 Gew.-%, vorzugsweise kleiner als 2 Gew.-%, vorzugsweise kleiner als 2 Gew.-%, vorzugsweise kleiner als 1 Gew.-%.

5. Polymer gemäß einem der vorstehenden Ansprüche, wobei das lösungsmittelhaltige Resol ein lösungsmittelhaltiges Reaktionsprodukt eines phenolreaktiven Aldehyds mit einem gegebenenfalls substituierten Phenol ist, wobei das gegebenenfalls substituierte Phenol vorzugsweise eine Verbindung der Formel 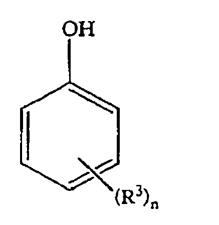 ist, wobei R³ für Folgendes steht: eine geradkettige oder verzweigte, gegebenenfalls ungesättigte Alkylgruppe, die 1 bis 8 Kohlenstoffatome (vorzugsweise 1 bis 4 Kohlenstoffatome, besonders bevorzugt 1 bis 2 Kohlenstoffatome) enthält und gegebenenfalls mit einem Halogenatom (vorzugsweise Chlor) oder einer Hydroxygruppe substituiert ist, ein Halogenatom (vorzugsweise Chlor), eine Hydroxygruppe und/oder eine Phenyl- oder Benzylgruppe (gegebenenfalls substituiert mit einer Hydroxygruppe und/oder einer geradkettigen oder verzweigten Alkylgruppe, die 1 bis 8 Kohlenstoffatome (vorzugsweise 1 bis 4 Kohlenstoffatome, besonders bevorzugt 1 bis 2 Kohlenstoffatome) enthält und gegebenenfalls mit einem Halogenatom (vorzugsweise Chlor) oder einer Hydroxygruppe substituiert ist); und
n für 0, 1 oder 2 steht;
und/oder der phenolreaktive Aldehyd vorzugsweise eine Verbindung der Formel
R⁴CHO (III),
wobei R⁴ für ein Wasserstoffatom oder eine geradkettige oder verzweigte Alkylgruppe, die 1 bis 8 (vorzugsweise 1 bis 4, besonders bevorzugt 1 bis 2) Kohlenstoffatome enthält, steht, oder eine Vorstufe einer Verbindung der Formel (III) ist.

6. Polymer gemäß einem der vorstehenden Ansprüche, wobei die Säure eine anorganische Säure, eine organische Säure oder eine Organomineralsäure ist, wobei die Organomineralsäure vorzugsweise eine niedrigmolekulare Organomineralsäure ist, bei der es sich um eine Verbindung der Formel
R⁵X (IV)
handelt, wobei R⁵ für Folgendes steht:
ein Wasserstoffatom;
eine geradkettige oder verzweigte Alkylgruppe, die 1 bis 8 Kohlenstoffatome (vorzugsweise 1 bis 4, besonders bevorzugt 1 bis 2 Kohlenstoffatome) enthält und gegebenenfalls mit einem Halogenatom substituiert ist; oder
eine Phenylgruppe, die gegebenenfalls substituiert ist mit einer geradkettigen oder verzweigten, gegebenenfalls ungesättigten Alkylgruppe, die 1 bis 8 Kohlenstoffatome (vorzugsweise 1 bis 4 Kohlenstoffatome, besonders bevorzugt 1 bis 2 Kohlenstoffatome) enthält und gegebenenfalls mit einer Hydroxygruppe substituiert ist, einem Halogenatom (vorzugsweise Chlor), einer Hydroxygruppe und/oder einer Phenyl- oder Benzylgruppe (gegebenenfalls substituiert mit einer Hydroxygruppe und/oder einer geradkettigen oder verzweigten Alkylgruppe, die 1 bis 8 Kohlenstoffatome (vorzugsweise 1 bis 4 Kohlenstoffatome, besonders bevorzugt 1 bis 2 Kohlenstoffatome) enthält); und
X für eine Sulfonsäuregruppe (-SO₃H), eine Phosphorsäuregruppe (-OP(OH)₃) oder eine Phosphonsäuregruppe (-P(O)(OH)₂) steht;
oder die Organomineralsäure vorzugsweise eine hochmolekulare Organomineralsäure ist, bei der es sich um eine Verbindung der Formel
(R⁶(X)CH₂)ₚ(R⁶CH₂)_{q}(R⁶) (V)
handelt, wobei R⁶ für eine Phenylgruppe steht, die gegebenenfalls substituiert ist mit einer geradkettigen oder verzweigten, gegebenenfalls ungesättigten Alkylgruppe, die 1 bis 8 Kohlenstoffatome (vorzugsweise 1 bis 4 Kohlenstoffatome, besonders bevorzugt 1 bis 2 Kohlenstoffatome) enthält und gegebenenfalls mit einer Hydroxygruppe substituiert ist, einem Halogenatom (vorzugsweise Chlor), einer Hydroxygruppe und/oder einer Phenyl- oder Benzylgruppe (gegebenenfalls substituiert mit einer Hydroxygruppe und/oder einer geradkettigen oder verzweigten Alkylgruppe, die 1 bis 8 Kohlenstoffatome (vorzugsweise 1 bis 4 Kohlenstoffatome, besonders bevorzugt 1 bis 2 Kohlenstoffatome) enthält);
X wie oben definiert ist; p für eine ganze Zahl von 1 bis 10 steht und q für eine ganze Zahl von 0 bis 9 steht, und zwar so, dass die Summe von p und q 3 bis 20 beträgt.

7. Polymer gemäß einem der vorstehenden Ansprüche, das weiterhin einen leitfähigen Füllstoff umfasst.

8. Elektrische Vorrichtung, umfassend:
(a) eine negative Elektrode;
(b) eine positive Elektrode;
(c) ein Elektrolytmittel; und gegebenenfalls
(d) eine Separator- und/oder bipolare Platte;
wobei eine oder mehrere der Komponenten Elektrode und/oder Elektrolytmittel, Separator- oder bipolare Platte ein Polymer gemäß einem der vorstehenden Ansprüche umfassen.

9. Geformter Artikel, geformt aus dem Polymer gemäß einem der Ansprüche 1 bis 7, wobei der Artikel zur Verwendung als elektrischer Stecker, elektrischer Stromträger, Abschirmung gegen elektrische oder elektrostatische Entladung, Elektrode, Heizelement, Elektrolyt und/oder Ionenaustauschermembran geeignet ist.

10. Geformter Artikel gemäß Anspruch 9, bei dem es sich um eine Separatorplatte, die zur Verwendung in einer Brennstoffzelle geeignet ist und ein oder mehrere Strömungsfelder zur Lenkung des Gasstroms aufweist, eine Elektrode, eine leitfähige Beschichtung oder eine leitfähige Membran handelt.

11. Verwendung eines Polymers gemäß einem der Ansprüche 1 bis 7 als Elektrode, als elektromagnetisches Abschirmungsmaterial zur Unterdrückung von elektromagnetischer Interferenz oder zur Verhinderung elektrostatischer Entladung an einer Stelle.

12. Zweikomponentige Zusammensetzung, die (a) lösungsmittelhaltiges Resol, wobei das lösungsmittelhaltige Resol im Wesentlichen frei von Wasser ist, und (b) eine Säure umfasst.

13. Verfahren zum Verkleben eines ersten Teils mit einem zweiten Teil, wobei das Verfahren die folgenden Schritte umfasst:
Bereitstellen eines lösungsmittelhaltigen Resols, das im Wesentlichen frei von Wasser ist, und einer Säure;
Mischen des lösungsmittelhaltigen Resols und der Säure; und
Verwenden der Mischung des lösungsmittelhaltigen Resols und der Säure zum Verkleben des ersten Teils mit dem zweiten Teil.

14. Zusammensetzung gemäß Anspruch 12 oder Verfahren gemäß Anspruch 13, wobei das lösungsmittelhaltige Resol und die Säure der Definition in einem der Ansprüche 1 bis 7 entsprechen.

15. Verfahren zur Herstellung eines leitfähigen Polymers, wobei das Verfahren Folgendes umfasst:
Bereitstellen eines lösungsmittelhaltigen Resols, das ein phenolisches Resol und ein Esterlösungsmittel umfasst;
gegebenenfalls Destillieren des lösungsmittelhaltigen Resols zum Entfernen von überschüssigem Wasser;
Mischen einer Säure mit dem lösungsmittelhaltigen Resol; und
Härtenlassen des Gemischs;
wobei das lösungsmittelhaltige Resol und die Säure vorzugsweise der Definition in einem der Ansprüche 1 bis 7 entsprechen.

## Revendications

1. Polymère conducteur comprenant une résole dissoute réticulée à l'aide d'un acide, où la résole dissoute est essentiellement exempte d'eau.

2. Polymère selon la revendication 1, dans lequel la résole dissoute comprend un solvant organique de faible polarité ayant de préférence un point d'ébullition supérieur à 100 °C.

3. Polymère selon l'une quelconque des revendications précédentes, dans lequel le solvant est un ester, un aldéhyde, une cétone, un halogénoalcane et/ou un acide carboxylique.

4. Polymère selon l'une quelconque des revendications précédentes, dans lequel la teneur en eau de la résole dissoute est inférieure à 5 % en poids, de préférence inférieure à 4 en poids, de préférence inférieure à 3 % en poids, de préférence inférieure à 2 % en poids, en poids, de préférence inférieure à 1 % en poids.

5. Polymère selon l'une quelconque des revendications précédentes, dans lequel la résole dissoute est un produit réactionnel avec solvant d'un aldéhyde réactif vis-à-vis du phénol avec un phénol optionnellement substitué, le phénol optionnellement substitué étant de préférence un composé répondant à la formule 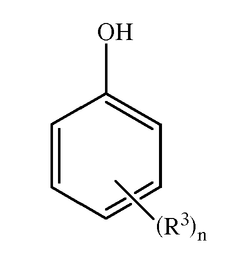 dans laquelle R³ représente un groupe alkyle optionnellement insaturé à chaîne linéaire ou ramifiée contenant de 1 à 8 atomes de carbone (de préférence de 1 à 4 atomes de carbone, plus préférablement de 1 à 2 atomes de carbone) optionnellement substitués par un atome d'halogène (de préférence du chlore) ou un groupe hydroxy, un atome d'halogène (de préférence du chlore), un groupe hydroxy, et/ou un groupe phényle ou benzyle (optionnellement substitué par un groupe hydroxy et/ou un groupe alkyle à chaîne linéaire ou ramifiée contenant de 1 à 8 atomes de carbone (de préférence de 1 à 4 atomes de carbone, plus préférablement de 1 à 2 atomes de carbone) optionnellement substitués par un atome d'halogène (de préférence du chlore) ou un groupe hydroxy) ; et
n représente 0, 1 ou 2,
et/ou l'aldéhyde réactif vis-à-vis du phénol étant de préférence un composé répondant à la formule
R⁴CHO (III)
dans laquelle R⁴ représente un atome d'hydrogène ou un groupe alkyle à chaîne linéaire ou ramifiée ayant de 1 à 8 (de préférence de 1 à 4, plus préférablement de 1 à 2, de manière préférée entre toutes 1) atomes de carbone ; ou un précurseur d'un composé répondant à la formule (III).

6. Polymère selon l'une quelconque des revendications précédentes, dans lequel l'acide est un acide inorganique, un acide organique ou un acide organo-minéral, l'acide organo-minéral étant de préférence un acide organo-minéral de faible poids moléculaire qui est un composé répondant à la formule
R⁵X (IV)
dans laquelle R⁵ représente
un atome d'hydrogène ;
un groupe alkyle à chaîne linéaire ou ramifiée contenant de 1 à 8 atomes de carbone (de préférence de 1 à 4, plus préférablement de 1 à 2 atomes de carbone) optionnellement substitués par un atome d'halogène ; ou
un groupe phényle optionnellement substitué par un groupe alkyle optionnellement insaturé à chaîne linéaire ou ramifiée contenant de 1 à 8 atomes de carbone (de préférence de 1 à 4 atomes de carbone, plus préférablement de 1 à 2 atomes de carbone) optionnellement substitués par un groupe hydroxy, un atome d'halogène (de préférence du chlore), un groupe hydroxy, et/ou un groupe phényle ou benzyle (optionnellement substitué par un groupe hydroxy et/ou un groupe alkyle à chaîne linéaire ou ramifiée contenant de 1 à 8 atomes de carbone (de préférence de 1 à 4 atomes de carbone, plus préférablement de 1 à 2 atomes de carbone)) ; et
X représente un groupe acide sulfonique (-SO₃H), un groupe acide phosphorique (-OP(OH)₃) ou un groupe acide phosphoreux (-P(O)(OH)₂) ;
ou l'acide organo-minéral étant de préférence un acide organo-minéral de poids moléculaire élevé qui est un composé répondant à la formule
(R⁶(X)CH₂)ₚ(R⁶CH₂)_{q}(R⁶) (V)
dans laquelle R⁶ représente un groupe phényle optionnellement substitué par un groupe alkyle optionnellement insaturé à chaîne linéaire ou ramifiée contenant de 1 à 8 atomes de carbone (de préférence de 1 à 4 atomes de carbone, plus préférablement de 1 à 2 atomes de carbone) optionnellement substitués par un groupe hydroxy, un atome d'halogène (de préférence du chlore), un groupe hydroxy, et/ou un groupe phényle ou benzyle (optionnellement substitué par un groupe hydroxy et/ou un groupe alkyle à chaîne linéaire ou ramifiée contenant de 1 à 8 atomes de carbone (de préférence de 1 à 4 atomes de carbone, plus préférablement de 1 à 2 atomes de carbone)) ;
X est tel que défini ci-dessus ; p représente un nombre entier de 1 à 10 et q représente un nombre entier de 0 à 9 tels que la somme de p et de q vaut de 3 à 20.

7. Polymère selon l'une quelconque des revendications précédentes qui comprend en outre une charge conductrice.

8. Dispositif électrique comprenant :
(a) une électrode négative ;
(b) une électrode positive ; et
(c) un électrolyte ; et optionnellement
(d) un séparateur et/ou une plaque bipolaire ;
dans lequel un(e) ou plusieurs électrodes et/ou électrolytes, séparateurs ou plaques bipolaires comprennent un polymère tel que défini dans l'une quelconque des revendications précédentes.

9. Article façonné fabriqué à partir du polymère tel que défini dans l'une quelconque des revendications 1 à 7, l'article pouvant être utilisé comme connecteur électrique, conducteur de courant électrique, blindage contre les décharges électriques ou électrostatiques, électrode, élément de chauffage, électrolyte et/ou membrane échangeuse d'ions.

10. Article façonné selon la revendication 9, qui est une plaque séparatrice pouvant être utilisée dans une pile à combustible ayant un ou plusieurs champs d'écoulement pour orienter l'écoulement gazeux, une électrode, un revêtement conducteur ou une membrane conductrice.

11. Utilisation d'un polymère tel que défini dans l'une quelconque des revendications 1 à 7 en tant qu'électrode, en tant que matériel de protection électromagnétique, pour supprimer les interférences électromagnétiques ou pour prévenir les décharges électrostatiques en un point.

12. Composition en deux parties comprenant (a) une résole dissoute, où la résole dissoute est essentiellement exempte d'eau ; et (b) un acide.

13. Procédé destiné à coller une première pièce à une deuxième pièce, lequel procédé comprenant les étapes consistant à fournir une résole dissoute essentiellement exempte d'eau et un acide ;
mélanger la résole dissoute et l'acide ; et
utiliser la résole dissoute et l'acide mélangés pour coller la première pièce à la deuxième pièce.

14. Composition selon la revendication 12 ou procédé selon la revendication 13, dans lequel la résole dissoute et l'acide sont tels que définis dans l'une quelconque des revendications 1 à 7.

15. Procédé de préparation d'un polymère conducteur, lequel procédé comprend les étapes consistant à :
fournir une résole dissoute qui comprend une résole phénolique et
un solvant composé d'un ester ;
optionnellement, distiller la résole dissoute pour éliminer l'excès d'eau ;
mélanger un acide avec la résole dissoute; et
laisser le mélange durcir,
la résole dissoute et l'acide étant de préférence tels que définis dans l'une quelconque des revendications 1 à 7.
